# EUROPÄISCHE PATENTSCHRIFT

(11) **EP 2 147 357 B1**
(45) Veröffentlichungstag und Bekanntmachung des Hinweises auf die Patenterteilung: **07.09.2011**
(21) Anmeldenummer: 07725227.8
(22) Anmeldetag: 15.05.2007
(51) Int. Cl.: G05B 19/042

(54) **DATENÜBERTRAGUNGSSYSTEM FÜR TEXTILMASCHINEN**
DATA TRANSMISSION SYSTEM FOR TEXTILE MACHINES
SYSTÈME DE TRANSFERT DE DONNÉES POUR MACHINES TEXTILES

(43) Veröffentlichungstag der Anmeldung: 27.01.2010
(73) Patentinhaber: Memminger-IRO GmbH, 72280 Dornstetten (DE)
(72) Erfinder: ONEDA, Filippo, I-25126 Brescia (IT); KLEINDORP, Markus, 72297 Seewald (DE); WEBER, Friedrich, 72285 Herzogsweiler (DE)
(74) Vertreter: Frese-Göddeke, Beate
(86) Internationale Anmeldenummer: PCT/EP2007/004309
(87) Internationale Veröffentlichungsnummer: WO 2008/138380

(56) Entgegenhaltungen:
- WO-A-99/14643
- WO-A-2004/003274
- DE-A1- 10 153 457
- US-A- 5 590 045

## Beschreibung

Die Erfindung betrifft ein Steuerungs- und Übertragungssystem für Daten an einer Textilmaschine sowie ein entsprechendes Datenübertragungaverfahren.

Zur Datenübertragung zwischen Sensoren oder Geräten an Textilmaschinen und einer Zentral steuerung sind verschiedene Systeme bekannt geworden. Beispielsweise offenbart die WO 99/14643 ein Bussystem mit einer Daisy-Chain-Leitung zur Initialisierung der einzelnen Busteilnehmer und mit einer Datenübertragungsleitung, an die alle Busteilnehmer angeschlossen sind und über die deren Zustände abfragbar sind.

Aus der WO 2004/003274 A1 ist ein Informationsübertragungssystem bekannt, bei dem die einzelnen Teilnehmer über eigene Leitungen an eine Zentralsteuerung angeschlossen sind.

In der DE 101 53 457 A1 ist ein Steuerverfahren für eine Textilmaschine mit einer Vielzahl von Bearbeitungsstellen, einer Steuereinheit und einem Bus zum Datenaustausch zwischen der Steuereinheit und jeder Bearbeitungsstelle beschrieben, wobei jede Bearbeitungsstelle zumindest ein Stellelement und zumindest eine Sensoreinrichtung aufweist. Bei diesem Verfahren werden Daten der Sensoreinrichtung einer Bearbeitungsstelle über den Bus zur unmittelbaren Auswertung durch das Stellelement der Bearbeitungsstelle ausgesendet. Die Daten dienen der direkten Ansteuerung des Stellelementes oder einer Ansteuerung mit Hilfe einer Steuereinrichtung des Stellelementes.

Ein Steuersystem insbesondere für eine Spinnmaschine mit vielen Arbeitsstationen jeweils mit Sensoren und Stellern ist aus der US-A-5 590 045 bekannt. Sensormodule für die Sensorsignale von z.B. 25 Sensoren und Steuermodule zur Erzeugung von Steuersignalen für die Steiler einer Schiene sind jeweils in Ketten und die Enden der Ketten mit einer zentralen Steuereinheit verbunden.

Es wird angestrebt, den Datenverkehr auf einem wie auch immer gearteten Bus möglichst gering zu halten, um einerseits viele Teilnehmer anschließen zu können und andererseits eine möglichst schnelle Reaktion der Zentralsteuerung auf Ereignisse an den Sensoren zu erreichen.

Es ist deshalb Aufgabe der Erfindung ein Steuerungs- und Übertragungssystem für eine Textilmaschine zu schaffen, das einerseits mit geringem Verdrahtungsaufwand und möglichst einfacher flexibler Struktur auskommt und andererseits eine zuverlässige Überwachung des Betriebs der Textilmaschine mittels der zu dem System gehörigen Sensoren gestattet. Weiter ist es Aufgabe, ein entsprechendes Verfahren anzugeben.

Diese Aufgabe wird mit dem Steuerungs- und Übertra- gungssystem nach Anspruch 1 bzw. dem Verfahren nach Anspruch 14 gelöst:

Das erfindungsgemäße Steuerungs- und Übertragungssystem kommt bei Betrieb der Textilmaschine mit einer äußerst niedrigen Datenrate aus und gestattet dennoch bei einfachster Verdrahtung eine intelligente Überwachung einzelner Sensoren. Das System weist eine zentrale Master-Steuereinheit auf. An diese sind über einen Bus Slave-Einheiten angeschlossen, die jeweils wenigstens einen Sensor aufweisen.

Die Echtzeit-Fernabfrage der Sensoren wird durch eine Listensteuerung der Sensoren abgelöst. Dies gelingt, indem Information, die den Betrieb der Textilmaschine betrifft, in einem vorbereitenden Schritt in wenigstens einigen der Slave-Einheiten abgespeichert wird. Zumindest diejenigen Slave-Einheiten, deren Sensoren nicht ständig ein und denselben Sollwert zu überwachen haben, sondern zeitweilig inaktiv sein sollen oder zeitweilig einen geänderten Sollwert, verschiedene Sollwerte oder variable Sollwerte überwachen sollen, speichern vor Aufnahme des Produktionsbetriebs der Textilmaschine einen entsprechenden Individualplan (d.h. eine Liste), den (die) sie synchronisiert abarbeiten.

Der Aufbau der Listen in den Sensoren kann prinzipiell auf unterschiedliche Weise geschehen. In einer ersten Variante werden die Teillisten für die Slave-Einheiten aus einem Musterdatenspeicher abgeleitet und von der Steüereinheit an die Slave-Einheiten übertragen. In einer zweiten Variante werden die Teillisten in den Slave-Einheiten in einem Lernlauf eigenständig aufgebaut. Während die Textilmaschine anhand der in dem Musterdatenspeicher gespeicherten Daten arbeitet, liefert sie Positionsimpulse an die Steuereinheit. Diese sendet ihrerseits synchron zum Betrieb der Textilmaschine Taktsignale an die Slave-Einheiten. Diese zeichnen nun die erfassten Sensorsignale auf und speichern diese in Verbindung mit den zugehörigen Taktsignale lokal ab. Es entsteht so eine durch die Taktsignale adressierte Liste für Solldaten, die der betreffende Sensor bei ordnungsgemäßem Betrieb zu erfassen hat.

Es sind auch Mischbetriebsformen möglich. Z.B. kann die an den Slave-Einheiten lokal erfassten Daten auch an die Master-Steuereinheit übertragen und dort abgespeichert werden. Die Master-Steuereiheit kann dann die Daten an einen oder mehrere Slave-Einheiten zurück übertragen. Dies kann erforderlich sein, wenn ein oder mehrere Slave-Einheiten z.B. zur Fehlerbehebung gewechselt worden sind. Es ist dann kein neuer Lernlauf erforderlich - vielmehr wird auf die im ersten Lernlauf erfassten Teillisten zurückgegriffen. Die Master-Steuereinheit bewahrt dann gewissermaßen eine Sicherheitskopie der Teillisten der Slave-Einheiten.

Zur Synchronisierung des Betriebs der Slave-Einheiten mit dem Betrieb der Textilmaschine erhalten die Slave-Einheiten ein Pointer-Signal, das jeweils auf einen bestimmten Listeneintrag zeigt, der mindestens einen Eintrag enthält, der dann als aktueller Sollwert gilt und für den Betrieb des Sensors zugrunde gelegt wird. Auf diese Weise arbeitet das Steuerungs- und Übertragungssystem der Textilmaschine mit verteilter Information. Mit anderen Worten, die teilnehmenden Sensoren erhalten durch Lernen oder Vorabübermittlung vorab ein Profil in Form eines Individualplans (Individualliste oder auch Teilliste), wobei dieses Profil zumindest ein Sollwert in Abhängigkeit von der Zeit, von dem Maschinentakts oder von einer anderen synchronisierenden Kenngröße sein kann. Damit kennt jeder Sensor zu jedem Zeitpunkt den aktuellen Sollwert und kann diesen überprüfen. Weicht der aktuelle Ist-Wert von dem aktuellen Soll-Wert ab, kann der Sensor ein Alarmsignal erzeugen, das an die Master-Steuereinrichtung übertragen wird.

Auf Basis dieses listengesteuerten Systems kann eine fortwährende Überprüfung variabler, d.h. sich mit dem Maschinentakt oder zeitlich ändernder Sollwerte an beliebig vielen Sensoren erfolgen, ohne dass die Sensoren dazu abgefragt werden müssten. Im-Idealfall ist der Datenverkehr deshalb während des Betriebs der Textilmaschine Null oder nahezu Null. Er beschränkt sich auf die Übermittlung der zur Synchronisation der Slave-Einheiten mit der Textilmaschine erforderlichen Taktsignale. Der von den Sensoren verursachte Datenverkehr ist hingegen vernachlässigbar. So lange keine Fehler auftreten, werden nach Übertragung der Individuallisten keine routinemäßigen Abfragen mehr unternommen und obwohl einzelne Sensoren aus- und eingeschaltet werden oder ihre Soll-Werte sich ändern.

Der Verdrahtungsaufwand ist ebenfalls gering. Das erfindungsgemäße Konzept gestattet die Nutzung einfacher Busstrukturen, wie beispielsweise Ring- oder Strangstrukturen mit wenigen Leitungen, Parallelbussysteme, Serialbussysteme, Daisy-Chain-Bussysteme usw. Bitraten von beispielsweise 9,6 kBit pro Sekunde sind zur Verwirklichung des erfindungsgemäßen Steuerungs- und Übertragungssystems vollkommen ausreichend. Es können deshalb sehr robuste, wenig störanfällige und einfache Datenübertragungsverfahren angewandt werden, die auch in einer Umgebung, die große elektromagnetische Störungen bereithält, und bei langen Leitungen zuverlässig funktionieren.

Die Sensoren sind vorzugsweise mit einer gemeinsamen Alarmleitung verbunden, um bei Auftreten eines fehlerhaften Zustands, d.h. beispielsweise einer zu großen Soll-Ist-Abweichung, ein Alarmsignal unverzögert an die Mastersteuereinrichtung weiter geben zu können. Diese Alarmleitung kann eine Leitung sein, die in einen ersten Initialisierungsschritt zur Adressierung der Sensoren genutzt wird. Sie kann als Daisy-Chain-Leitung ausgebildet sein, wobei sie durch jede Slave-Einheit führt. Während der Initialisierung ist die Verbindung zwischen Eingang und Ausgang an der Slave-Einheit offen. Ist die Initialisierung erfolgt, wird die Verbindung geschlossen und die betreffende Slave-Einheit geht in eine zweite Betriebsart (Transparentbetriebsart) über.

Des Weiteren können die einzelnen Slave-Einheiten über den Datenbus mit ihrer Individualadresse angesprochen werden, um ihren Individualplan zu empfangen. Dieser Schritt dient der Vorbereitung des Betriebs des Steuerungs- und Übertragungssystems und kann noch der Initialisierung zugerechnet werden.

Weitere Einzelheiten vorteilhafter Ausführungsformen der Erfindung ergeben sich aus der Zeichnung, der Beschreibung oder Ansprüchen.

Die Beschreibung beschränkt sich auf wesentliche Elemente der Erfindung und sonstiger Gegebenheiten. Die Zeichnung ist ergänzend heranzuziehen. Sie enthält weitere Einzelheiten.

In der Zeichnung ist ein Ausführungsbeispiel der Erfindung veranschaulicht. Es zeigen:
Figur 1 eine Rundstrickmaschine in schematisierter Gesamtansicht,
Figur 2 ein Fadenliefergerät mit einem Fadenfühlhebel in schematisierter Darstellung,
Figur 3 einen Übersichtsplan des erfindungsgemäßen Steuerungs- und Übertragungssystems, über das einzelne Slave-Einheiten, wie beispielsweise das Fadenliefergerät nach Figur 2, mit einer Master-Steuereinrichtung kommunizieren,
Figur 4 den logischen Aufbau des Steuerungs- und Übertragungssystems nach Figur 3 in abstrakter Übersichtsdarstellung und
Figur 5 einen Übersichtsplan eines alternativen Steuerungs- und Übertragungssystems, über das einzelne Slave-Einheiten mit einer Master-Steuereinrichtung kommunizieren.

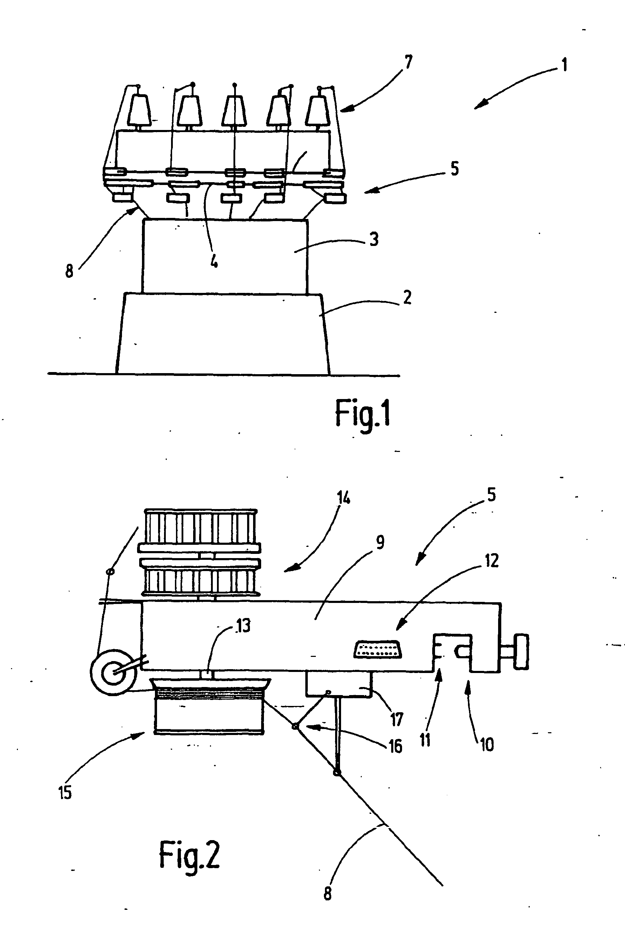

In Figur 1 ist als Beispiel für eine Textilmaschine eine Rundstrickmaschine 1 veranschaulicht, die beispielsweise zur Herstellung glatter oder auch gemusterter Ware dient. Die Rundstrickmaschine 1 weist ein Maschinengestell mit einem Strickzylinder 3 auf, oberhalb dessen ein ringförmiger Träger, ein so genannter Maschinenring 4 vorgesehen ist. Auf diesem sitzen Fadenliefergeräte 5, die von einem gemeinsamen Riemen 6 angetrieben sind und dazu dienen, von Garnspulen 7 abgezogene Fäden 8 zu Strickstellen der Strickmaschine 1 zuzuführen.

Figur 2 veranschaulicht ein solches Fadenliefergerät 5 schematisch. Es weist einen Halter 9 auf, der an einem Ende mit einer Klemme 10 zur Befestigung an dem Maschinenring 4 versehen ist. An der Klemme 10 können auch elektrische Kontakte 11 zum Anstechen oder sonstigen Kontaktieren einer oder mehrerer Verbindungsleitungen, Kommunikationsleitungen usw. dienen. An dem Halter 9 können weitere Anschlussmittel, wie beispielsweise eine elektrische Anschlussbuchse 12 zum Anschluss von Busleitungen vorgesehen sein. An dem Halter 9 ist außerdem eine Welle 13 drehbar gelagert, die beispielsweise an einem Ende Riemenscheiben 14 und an ihrem unteren Ende ein Fadenlieferrad 15 trägt, das zur positiven Lieferung des Fadens 8 dient. Um zu überwachen, ob der Faden 8 tatsächlich vorhanden ist, oder ob er womöglich abgerissen ist, unzulässig durchhängt oder einen anderen auf diese Weise erfassbaren unzulässigen Zustand eingenommen hat, ist ein Fadenfühlhebel 16 vorgesehen, dessen Schwenkposition von der Spannung des Fadens 8 abhängt. Fällt die Fadenspannung zu sehr ab oder fehlt der Faden 8, schwenkt der Fühlhebel 16 in eine frei herab hängende Position. Ein in oder an dem Halter 9 angeordneter Sensor 17 erfasst dies. In diesem Fall ist der Sensor ein einfacher mechanisch oder magnetisch betätigter Schalter.

Das Fadenliefergerät 5 ist lediglich ein Beispiel für eine Einrichtung mit einem Sensor 17. Die vorliegende Erfindung ist auch auf motorgetriebene Fadenliefergeräte, spannungsgeregelte Fadenliefergeräte oder Sensoren anwendbar, die ohne Fadenförderfunktion an entsprechenden Stellen der Strickmaschine 1 oder einer sonstigen Textilmaschine angeordnet sind und keine andere Aufgabe haben, als eine den Faden betreffende Größe zu überwachen. Die überwachte Größe kann dabei z.B. sein, ob der Faden vorhanden ist oder nicht; ob der Faden läuft oder nicht; die Spannung des Fadens; die Geschwindigkeit des Fadens; die Menge des durchlaufenden Fadens oder ähnliches.

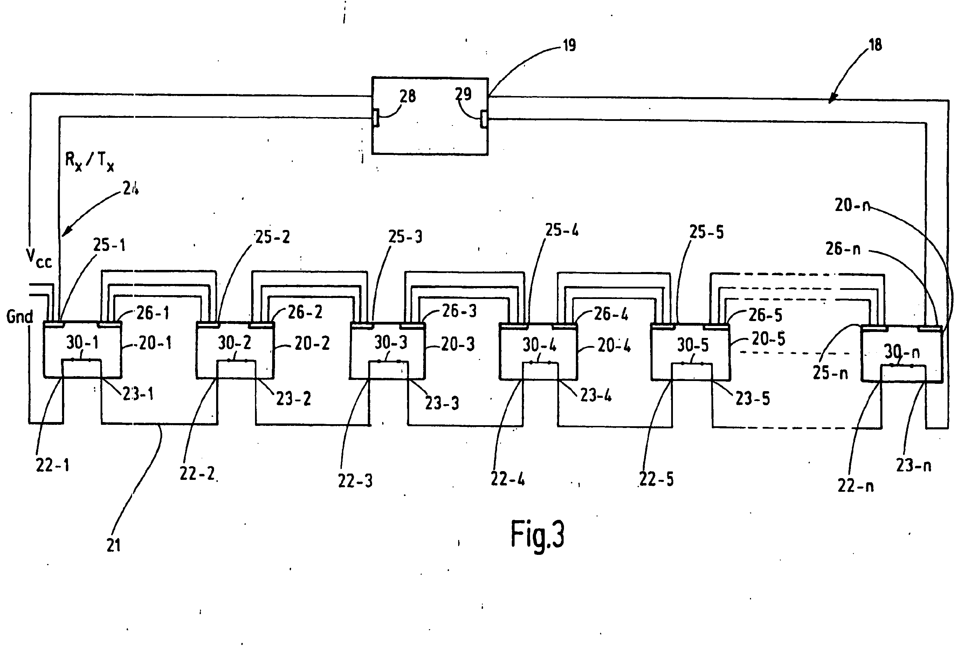

Figur 3 veranschaulicht ein elektrisches Blockbild eines Steuerungs- und Übertragungssystems 18, über das die einzelnen Sensoren mit einer Steuerungseinrichtung der Rundstrickmaschine zu verbinden sind. Die Steuerungseinrichtung enthält vorzugsweise eine Master-Steuereinrichtung 19, die mit den Sensoren verbunden sind. Die Sensoren, d.h. die geeigneten Messwertaufnehmer, Messwertwandler und so weiter, sind elektrisch gesehen Teil von Slave-Einheiten 20-1, 20-2, 20-3, 20-4, 20-5 bis 20-n. Jeder dieser Slave-Einheiten 20-1 bis 20-n ist an eine Daisy-Chain/Priority-Line 21 angeschlossen. Die Daisy-Chain-Leitung 21 führt von Slave-Einheit zu Slave-Einheit. Jede Slave-Einheit 20-1 bis 20-n weist dazu einen Daisy-Chain-Eingang 22-1 bis 2.2-n und einen Ausgang 23-1 bis 23-n auf. Außerdem sind alle Slave-Einheiten 20-1 bis 20-n mit Masse (Gnd) und mit Betriebsspannung (V_{cc}) verbunden. Außerdem sind alle Slave-Einheiten 20-1 bis 20-n mit einem Bus 24, beispielsweise einem geeigneten Zweidrahtbus verbunden. Die Slave-Einheiten 20-1 bis 20-n weisen dazu entsprechende Buseingänge 25-1 bis 25-n und entsprechende Ausgänge 26-1 bis 26-n auf. Der Bus 24 (beispielsweise mit den Signalen Rₓ und Tₓ) ist mit einem entsprechenden Ausgang 28 der Master-Steuereinrichtung 19 und einem Eingang 29 derselben verbunden. Zur Herstellung der entsprechenden Leitungsverbindungen können Kabel dienen, die beispielsweise an die Anschlussbuchse 12 gemäß Figur 2 angeschlossen werden. Das Fadenliefergerät 5 nach Figur 2 kann dazu an beiden Flanken jeweils eine solche Anschlussbuchse 12 aufweisen, so dass der Bus gemäß Figur 3 dadurch hergestellt wird, dass benachbarte Geräte durch Kabel miteinander verbunden werden.

Die Initialisierung des Steuerungs- und Übertragungssystems 18 geht wie folgt:

Die Initialisierung erfolgt über die Daisy-Chain/Priority-Line 21. Zunächst sind die internen Schalter 30-1 bis 30-n, die jeweils Eingang und Ausgang 22-1, 23-1 bis 22-n, 23-n miteinander verbinden, offen. Der Initialisierungsbefehl der Master-Steuereinrichtung 19 erreicht somit zunächst die in der Kette erste Slave-Einheit 20-1. Diese erhält über den Bus 24 eine erste Adresse. Alternativ legt sie ihre Adresse eigenständig fest. Sodann schließt sie den Schalter 30-1 und gibt somit das Initialisierungssignal an die zweite Slave-Einheit 20-2 weiter. Diese ordnet sich nun die nächste Adresse zu und gibt das Initialisierungssignal an die nachfolgende Slave-Einheit 20-3 weiter. So setzt sich die Initialisierung über den gesamten Kreis des Steuerungs- und Übertragungssystems fort.

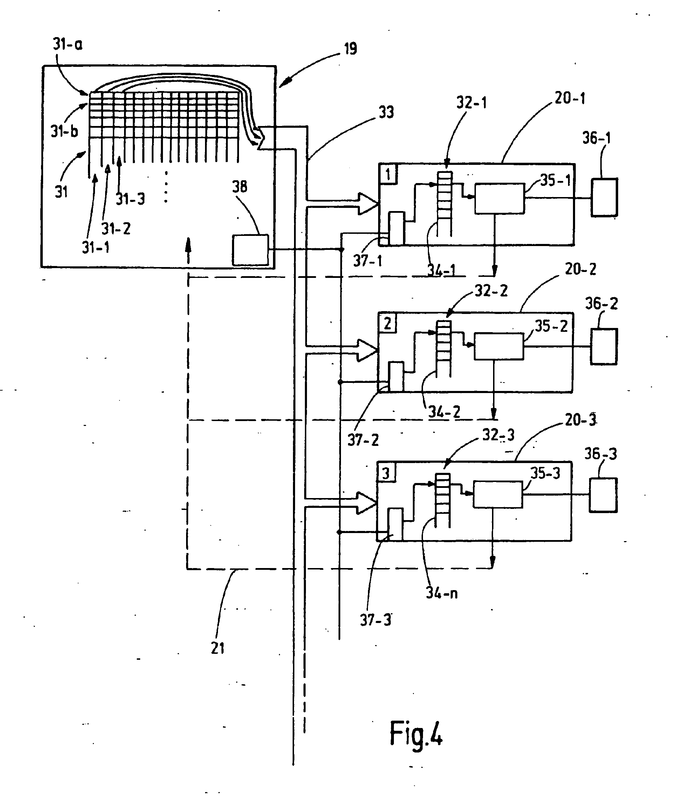

Ist die Initialisierung erfolgt; kann jede Slave-Einheit 20-1 bis 20-n individuell von der Master-Steuereinrichtung 19 angesprochen werden. Diese Eigenschaft wird genutzt, um den Slave-Einheiten 20-1 bis 20-n Informationen zu übermitteln. Dies kann synchron und gleichzeitig mit der in der ersten Betriebsart stattfindenden Initialisierung oder unmittelbar im Anschluss an diese oder auch in einigem zeitlichen Abstand erfolgen. Die Informationsübermittlung findet jedenfalls statt bevor die Rundstrickmaschine 1 ihren regulären Betrieb aufnimmt. Zur Verdeutlichung wird auf Figur 4 verwiesen.

Die Rundstrickmaschine 1 sei dazu vorgesehen, gemusterte Ware zu erzeugen, bei der verschiedene Gruppen von Fadenliefergeräten zeitweilig keinen Faden liefern. Beispielsweise kann dies erreicht werden, indem entsprechend gruppenweise geordnete Fadenliefergeräte von unterschiedlichen Motoren über gesonderte Riemen angetrieben werden. Es ist auch erreichbar, indem motorbetriebene Positivfournisseure eingesetzt werden.

In einem Musterspeicher ist das entsprechende zu erzeugende Muster abgespeichert. Dazu enthält der Musterspeicher Information für jeden der Rundstrickmaschine 1 zugeführten Faden. Dabei ist die Information darüber vorhanden, in welcher Position der Strickmaschine der Faden einen gewünschten Zustand haben soll. Unter "Position der Strickmaschine" wird dabei beispielsweise der Winkel des Strickzylinders zuzüglich der Anzahl der durchlaufenen Zylinderumdrehungen verständen. Unter "Zustand des Fadens" wird beispielsweise verstanden, ob der Faden läuft oder nicht. Diese Information kann in Form einer Tabelle an die Master-Steuereinrichtung 19 übergeben oder von dieser aus anderen Daten erzeugt werden. Eine solche Tabelle 31 ist in Figur 4 veranschaulicht. Sie enthält beispielsweise verschiedene Spalten 31-1, 31-2, 31-3 usw. und mehrere Zeilen 31-a, 31-b usw. Während jede Spalte 31-1 bis 31-n einem angeschlossenen Sensor zugeordnet ist, ist jede Zeile 31-a bis 31-n einer Maschinenposition zwischen Anfang und Ende des Produktionszyklusses eines gewünschten Strickstücks oder eines Warenabschnitts zugeordnet. Eine "0" kann dabei dafür stehen, dass der Faden steht, während eine "1" dafür stehen kann, dass der Fade läuft.

"Zur erweiterten Initialisierung der Slave-Einheiten 20-1 bis 20-n gehört nun, dass diese nacheinander über den Bus 24 angesprochen werden und Individualinformation erhalten. Dazu wird aus der Tabelle 31, die einen Gesamtplan für die Sensoren darstellt, für jeden Sensor jeweils ein Individualplan abgeleitet. Dieser besteht im einfachsten Fall jeweils aus einer Spalte 31-1 bis 31-n. Beispielsweise wird an den Sensor Nr. 1 in Figur 4, der an die Slave-Einheit 20-1 angeschlossen oder Teil derselben ist, die erste Spalte 31-1 übertragen. An den Sensor 2 wird die zweite Spalte 31-2 übertragen. Ebenso wird an den Sensor 3 die dritte Spalte 31-3 übertragen. Somit erhält jede Slave-Einheit 20-1 bis 20-n jeweils ihren Individualplan 32-1 bis 32-n. Der Datenfluss ist in Figur 4 durch einen Pfeil 33 veranschaulicht. Er läuft über den Bus 24. Die Individualpläne können aus der Tabelle 31 oder alternativ auch aus einer anderen Datenstruktur abgeleitet werden, die die entsprechende Information enthält oder aus der die Individualpläne herleitbar sind.

Die Individualpläne 32-1 bis 32-n werden in entsprechenden Speicherregistern 34-1 bis 34-n der Slave-Einheiten 20-1 bis 20-n abgespeichert. Außerdem weist jede Slave-Einheit 20-1 bis 20-n eine Verarbeitungseinrichtung 35-1 bis 35-n auf, die im einfachsten Fall ein Komparator sein kann. Er bzw. sie vergleicht einen aus dem Speicherregister 34-1 bis 34-n geholten Soll-Wert mit einem aus dem jeweiligen Sensor 36-1 bis 36-n kommenden Ist-Wert. Jede Verarbeitungseinrichtung 35-1 bis 35-n hat einen Ausgang, der im konkreten Fall durch die Priority-Line 21 gebildet ist. Der Ausgang kann beispielsweise ein Open-Collector-Ausgang sein, mit dem das Potential der Priority-Line 21 zum Zwecke der Alarmsignalisierung auf Masse gezogen wird, während es ansonsten über einen Widerstand auf einem anderen Potential, beispielsweise Betriebsspannungspotential, gehalten wird. Außerdem kann die Priority-Line 21 zur Übertragung von Taktimpulsen zur Synchronisierung der Slave-Einheiten 20-1 ... 20-n dienen. Die Alarmsignalisierung kann durch die - Slave-Einheiten 20-1 ... 20-n zwischen einzelnen Taktimpulsen erfolgen. Alternativ können Taktsignale über den Bus, z.B. über die Leitung Tₓ übertragen werden.

Des Weiteren weist jede Slave-Einheit 20-1 bis 20-n eine Pointer-Einrichtung 37-1 bis 37-n auf, die über eine Leitung mit einem Geber 38 verbunden ist. Der Geber ist Teil der Master-Steuereinrichtung 19. Er kann mit den Pointer-Einrichtungen 37-1 bis 37-n über die Priority-Line 21 oder eine oder mehrere der Leitungen des Bus 24 kommunizieren.

Im einfachsten Fall ist die Pointer-Einrichtung 37-1 bis 37-n ein Zähler, der Taktimpulse zählt, die der Geber 38 abgibt. Diese Taktimpulse veranlassen dann alle Pointer-Einrichtungen 37-1 bis 37-n synchron zu zählen. Das Zählergebnis wird jeweils als Positionsnummer des Individualplans 32-1 bis 32-n, d.h. als entsprechende Speicherstelle der Speichereinrichtung 34-1 bis 34-n gewertet.

Wenn alle Slave-Einheiten ihre Individualpläne 32-1 bis 32-n erhalten haben, kann das System wie folgt arbeiten:

Die Rundstrickmaschine 1 erhält den Startbefehl. Die - Master-Steuereinrichtung 19 hat zuvor alle Slave-Einheiten 20-1 bis 20-n mit ihren jeweiligen Individualplänen versorgt. Der Geber 38 sendet nun ein erstes Synchronsignal, womit die Pointer-Einrichtungen 37-1 bis 37-n auf die erste Position der Speichereinrichtung 34-1 bis 34-n zeigen. Der auf der ersten Position stehende erste Wert ist für die Slave-Einheit 20-1 gleich null. Ebenso für die zweite Slave-Einheit 20-2. Für die dritte Slave-Einheit 20-3 ist der Soll-Wert eins. Diese Soll-Werte werden nun von den Verarbeitungseinrichtungen 35-1 bis 35-n für den weiteren Betrieb zu Grunde gelegt und mit den von den Sensoren 36-1 bis 36-n gelieferten Ist-Werten verglichen. Stimmen die Soll-Werte mit den Ist-Werten ausreichend genau überein, werden keine Alarmsignale erzeugt. Dieser Vorgang wird so lange fortgesetzt, bis an der Rundstrickmaschine 1 ein anderer Zustand erwartet wird. Dieser andere Zustand kann einige Maschinenumdrehungen später oder auch lediglich wenige Grad der Umdrehung des Strickzylinders später sein. Der Geber 38 sendet nun ein Weiterschaltsignal an die Pointer-Einrichtungen 37-1 bis 37-n. Diese zählen um eins weiter und zeigen nun, wie dargestellt, auf den zweiten Listenplatz. Der Soll-Wert für den ersten Sensor 36-1 ist somit "0". Dies bedeutet beispielsweise, dass ein nichtlaufender (stehender) Faden erwartet wird. Der zweite Sensor 36-2 muss jedoch einen laufenden Faden anzeigen, denn der zweite Listenplatz ist "1".

Während die ersten beiden Sensoren 36-1, 36-2 beispielsweise lediglich unterscheiden, ob der Faden läuft oder nicht, ist im vorliegenden Beispiel der dritte Sensor 36-3 ein Sensor der unterschiedliche Werte liefern kann, indem er beispielsweise die Fadenspannung erfasst. Auf dem zweiten Listenplatz steht der Wert "20". Dies ist der Soll-Wert, mit dem die Verarbeitungseinrichtung 35-3 nun den Ist-Wert so lange vergleicht bis auf den nächsten Listenplatz weiter geschaltet wird.

Sobald einer der Sensoren feststellt, dass der von ihm überwachte Wert nicht vorhanden oder nicht eingehalten ist, sendet er ein Alarmsignal über die Leitung 21. Die Strickmaschine kann somit unverzögert abschalten. In einem weiteren Schritt kann der betreffende Sensor dann seine Adresse und weitere Information senden.

Abweichend von der vorstehenden Beschreibung können die Individualpläne auch entsprechend vereinbarte Symbole enthalten, die den betroffenen Sensor passiv schalten, so dass er so lange dieser Befehl gilt, ungeachtet des tatsächlich vorhandenen Zustands des Fadens kein Signal erzeugt. Damit können Sensoren wahlweise gezielt abgeschaltet werden.

Abweichend von dem vorbeschriebenen Beispiel kann der Geber 38 an Stelle von Einzelimpulsen auch komplette Adressen an die Pointer-Einrichtungen 37-1 bis 37-n senden, die diese Adresse dann zum Auslesen ihrer jeweiligen Individualpläne 32-1 bis 32-n nutzen. Hat jeder Individualplan beispielsweise 100 Positionen kann der Geber 38 die entsprechende Positionsnummer von 1 bis 100 senden.

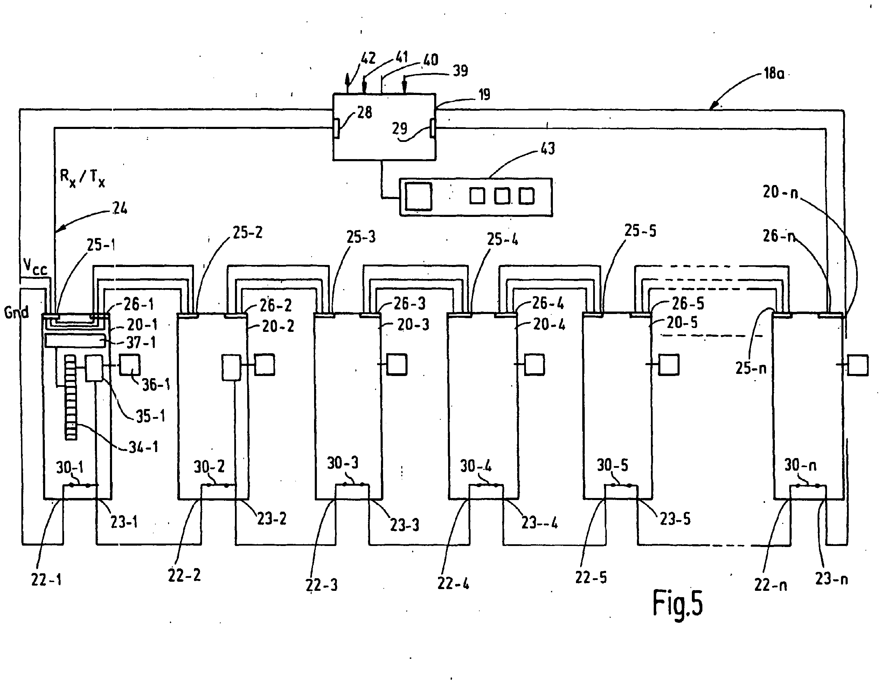

Eine weitere gegenwärtig als besonders vorteilhaft angesehen Ausführungsform der Erfindung veranschaulicht Figur 5. Sie beruht im Wesentlichen auf der Ausführungsform nach Figur 3, wobei unter Zugrundelegung gleicher Bezugszeichen die vorige Beschreibung entsprechend gilt. Ergänzend gilt die Beschreibung zu Figur 4 ebenfalls unter - Zugrundelegung gleicher-Bezugszeichen. Das Steuerungs- und Übertragungssystem 18a nach Figur 5 beruht jedoch, anders als die vorstehend beschriebenen Systeme, nicht auf einer Ausnutzung der Daten des Musterspeichers der Textilmaschine. Vielmehr ist es in der Lage, unabhängig davon zu arbeiten. Seine Mastersteuereinrichtung 19 ist über mehrere Leitungen mit der Strickmaschine oder sonstigen Textilmaschine verbunden. Eine erste Leitung 39 erhält beispielsweise synchronisierende Taktimpulse von der Textilmaschine. Diese Impulse kennzeichnen bei einer Strickmaschine beispielsweise die aktuelle Drehposition des Hauptstrickzylinders sowie die Anzahl der im Strickzyklus bereits vollführten Umdrehungen. Eine weitere Leitung 40 kann dazu vorgesehen sein, der Mastersteuereinrichtung 19 den Anfang und das Ende eines Strickmusterzyklus zu signalisieren. Weitere Leitungen 41, 42 können dafür vorgesehen sein, ein Stoppsignal an die Strickmaschine zu senden und von der Strickmaschine ein Stopprücksetzsignal zurück zu erhalten.

Außerdem kann an die Mastersteuereinrichtung 19 ein Handsteuergerät 43 anschließbar sein, das beispielsweise zur Programmierung der einzelnen Sensoren 36-1 usw., beispielsweise zum Einstellen von Schaltschwellen und dergleichen, dienen kann.

Die Besonderheit des Steuerungs- und Übertragungssystems 18a liegt in einem Lernmodus. In diesem werden die einzelnen. Speichereinrichtungen 34-1 bis 34-n in einem Lernlauf mit Daten versorgt. Der Lernlauf wird mittels der Strickmaschine anhand ihrer Mustersteuerung durchgeführt. Dabei erfassen die Sensoren 36-1 bis 36-n die sich jeweils einstellenden Fadenzustände und speichern diese im Takt der Strickmaschine in ihren Speichereinrichtungen 34-1 bis 34-n ab. Dazu nutzt die Mastereinrichtung 19 die über die Leitung 39 herangeführten Taktsignale und gibt entsprechende Taktsignale z.B. über die Leitung Tₓ des Bus 24 an alle Slave-Einheiten 20-1 bis 20-n. Die Mastereinheit 19 kann den von der Maschine erhaltenen Takt verfeinern. Dies ist beispielsweise dann zweckmäßig, wenn pro Strickzylinderumdrehung nur ein oder auch nur vier Einzelimpulse erzeugt werden. Die Mastersteuereinheit 19 kann dann in den Impulszwischenräumen synthetisierte Impulse erzeugen, die jeweils etwa beispielsweise ein Grad Strickzylinderumdrehung entsprechen. Somit können die Slave-Einheiten 20-1 bis 20-n die erfassten Fadenzustände für jeden Winkelgrad der Strickzylinderumdrehung abspeichern. Sie weisen entsprechend große Speicherbereiche auf.

Ist ein Musterstück gestrickt, sind alle Speichereinrichtungen 34-1 bis 34-n mit Solldaten gefüllt. Nachfolgend kann der Strickprozess anhand dieser Solldaten, wie vorstehend im Zusammenhang mit Figur 3 beschrieben, stattfinden.

Außerdem kann vorgesehen werden, die Slave-Einheiten 20-1 bis 20-n zu veranlassen, die erfassten Daten an die Mastersteuereinrichtung 19 zu senden. Die Mastersteuereinrichtung 19 kann dafür ausgelegt werden, diese Daten abzuspeichern, um somit gewissermaßen eine Sicherheitskopie der Daten anzulegen. Es entsteht dann in der Mastersteuereinheit 19 eine Tabelle wie gemäß Figur 4 bereits veranschaulicht und beschrieben. Diese Tabelle kann später genutzt werden, um das System unempfindlich hinsichtlich des Auswechselns einzelner oder aller Slaves zu gestalten. Ist ein Slave defekt kann er ausgewechselt werden. Nach Initialisierung des neuen Slaves kann dieser die Daten von der Mastersteuereinheit 19 erhalten, ohne dass erneut ein Lernlauf stattfinden müsste.

Bei dem erfindungsgemäßen Steuerungs- und Übertragungssystem erhalten die eingebundenen Slave-Einheiten 20-1 bis 20-n vor Aufnahme des Produktionsbetriebs der Textilmaschine 1 einen für sie gültigen Teil-Fahrplan, den sie anhand eines Synchronisierungssignals abarbeiten. Damit können Sensoren einer Textilmaschine gruppenweise ein- und ausgeschaltet werden. Darüber hinaus können den Slave-Einheiten über die Individuallisten zeitlich variable Vorgabe- oder Sollwerte zugesandt werden.

### Bezugszeichen

- 1: Rundstrickmaschine
- 2: Maschinengestell
- 3: Strickzylinder
- 4: Maschinenring
- 5: Fadenliefergerät
- 6: Riemen
- 7: Garnspule
- 8: Fäden
- 9: Halter
- 10: Klemme
- 11: Kontakte
- 12: Anschlussbuchse
- 13: Welle
- 14: Riemenscheibe
- 15: Fadenlieferrad
- 16: Fühlhebel
- 17: Sensor
- 18, 18a: Steuerungs- und Übertragungssystem
- 19: Mastersteuereinrichtung
- 20-1 ... 20-n: Slave-Einheiten
- 21: Daisy-Chain/Priority-Line
- 22-1 ... 22-n: Daisy-Chain-Eingänge
- 23-1 ... 23-n: Daisy-Chain-Ausgänge
- 24: Bus
- 25-1 ... 25-n: Eingänge
- 26-1 ... 26-n: Ausgänge
- 28: Ausgang
- 29: Eingang
- 30-1 ... 30-n: Schalter
- 31: Tabelle
- 31-1 ... 31-n: Spalten
- 31-a ... 31-n: Zeilen
- 32-1 ... 32-n: Individualplan
- 33: Pfeil
- 34-1 ... 34-n: Speichereinrichtung
- 35-1 ... 35-n: Verarbeitungseinrichtung
- 36-1 ... 36-n: Sensor
- 37-1 ... 37-n: Pointereinrichtung
- 38: Geber
- 39, 40, 41, 42: Leitungen
- 43: Handsteuergerät

## Patentansprüche

1. Steuerungs- und Übertragungssystem (18) für eine Textilmaschine (1),
- mit wenigstens einer Mastersteuereinrichtung (19),
- mit mehreren Slave-Elnheiten (20-1 ... 20-n), die Jeweils wenigstens einen Sensor (36-1 ... 36-n), eine Speichereinrichtung (34-1 ... 34n) zur Abspeicherung sensorspezifischer Sensor-Sollwerte, eine Verarbeitungseinrichtung (35-1 ... 35-n) und eine Pointereinrichtung (37-1 ... 37n) zur Auswahl eines aktuellen Sensor Sollwerts aus der Speichereinrichtung (34-1 ... 34n) enthalten, wobei die Verarbeitungseinrichtung (35-1 ... 35n) darauf eingerichtet ist, den von der Pointereinrichtung (37-1 ... 37n) bezeichneten Sollwert mit einem von dem Sensor (36-1 ... 36-n) gelieferten ist-Wert zu vergleichen und ein Alarmsignal zu erzeugen, wenn keine ausreichende Übereinstimmung zwischen dem Sensor-Sollwert und dem Ist-Wert vorliegt,
- mit einer Informationsübertragungseinrlchtung (24) an der Mastersteuereinrichtung (19), über die die Slave-Einheiten (20-1 ... 20-n) an die Mastersteuereinrlohtung (19) angeschlossen sind, um information von der Mastersteuereinrichtung (19) zu empfangen und information an die Mastersteuereinrichtung (19) zu senden, und
- mit einer Listensteuerung der Sensoren (38-1...38-n), wobei sensorspezifische Individualpläne (32-1...32-n) mit den Sensor-Sollwerten in den Speichereinrichtungen (34-1...34n) abgespeichert und synchronisiert abgearbeitet werden.

2. Steuerungs- und Übertragungssystem nach Anspruch 1, **dadurch gekennzeichnet, dass** die Master-Steuereinrichtung (19) aus einem Gesamtplan (31) abgeleitete sensorspezifische Individualpläne (32-1 ... 32-n) an die Slave-Einheiten (20-1 ... 20-n) überträgt.

3. Steuerungs- und Übertragungssystem nach Anspruch 1, **dadurch gekennzeichnet, dass** die Individualpläne (32-1 ... 32-n) die maschinenpositionsspezifische Sensor-Sollwerte enthalten.

4. Steuerungs- und Übertragungssystem nach Anspruch 1, **dadurch gekennzeichnet, dass** die Slave-Einheiten (20-1 ... 20-n) dazu eingerichtet sind, in einem Lernlauf die von ihren Sensoren (36-1 ... 36-n) erfassten Signale als sensorspezifische Sensor-Sollwerte in Korrelation zu Taktsignalen in der Speichereinrichtung (34-1 ... 34n) abzuspeichern.

5. Steuerungs- und Übertragungssystem nach Anspruch 4, **dadurch gekennzeichnet, dass** die Taktsignale von der Mastersteuereinrichtung (19) geliefert sind und die Maschinenposition kennzeichnen.

6. Steuerungs- und Übertragungssystem nach Anspruch 4, **dadurch gekennzeichnet, dass** die Sensoren (36-1 ... 36-n) die im Lernlauf gewonnenen Sensor-Sollwerte an die Mastersteuereinrichtung (19) übertragen.

7. Steuerungs- und Übertragungssystem nach Anspruch 1, **dadurch gekennzeichnet, dass** zur Übertragung des Alarmsignals eine Alarmleitung (21) vorgesehen ist, an die alle Slave-Einheiten (20-1 ... 20-n) angeschlossen sind.

8. Steuerungs- und Übertragungssystem nach Anspruch 7, **dadurch gekennzeichnet, dass** die Alarmleitung (21) eine Leitung ist, die von einem Ausgang (23-1 ... 23-n-1) einer Slave-Einheit (20-1 ... 20-n) zu einem Eingang (22-2 ... 22-n) einer nachfolgenden Slave-Einheit (20-2 ... 20-n) geht.

9. Steuerungs- und Übertragungssystem nach Anspruch 7, **dadurch gekennzeichnet, dass** die Alarmleitung (21) in einer ersten Betriebsart des Steuerungs- und Übertragungssystems zur Adressierung der Slave-Einheiten (20-1 ... 20-n) dient

10. Steuerungs- und Übertragungssystem nach Anspruch 8, **dadurch gekennzeichnet, dass** in der ersten Betriebsart der für den Anschluss der Alarmleitung (21) vorgesehene Eingang (22-1 ... 22-n) und der zugehörige Ausgang (23-1 ... 23-n) untereinander nicht verbunden sind.

11. Steuerungs- und Übertragungssystem nach Anspruch 8, **dadurch gekennzeichnet, dass** die Alarmleitung (21) in einer zweiten Betriebsart ausschließlich der Übertragung eines Alarmsignals dient, wobei an jeder Slave-Einheit (20-1 ... 20-n) der zum Anschluss der Alarmleitung (21) dienenden Eingang (22-1 ... 22-n) mit dem zugeordneten Ausgang (23-1 ... 23-n) verbunden ist.

12. Steuerungs- und Übertragungssystem nach Anspruch 1, **dadurch gekennzeichnet, dass** die Pointereinrichtung (37-1 ... 37-n) einen Impulszähler enthält und von der Mastersteuereinrichtung (19) ein Zählimpulssignal empfängt, um den Pointerwert zum Abruf des aktuellen Sollwerts aus der Spelchereinrichtung (34-1 ... 34-n) zu ermitteln.

13. Steuerungs- und Übertragungssystem nach Anspruch 1, **dadurch gekennzeichnet, dass** die Pointereinrichtung (37-1 ... 37-n) einen Adressdekoder enthält und von der Mastersteuereinrichtung (19) ein Adresssignal empfängt, um aus diesem den Pointerwert zum Abruf des aktuellen Sollwerts aus der Speichereinrichtung (43-1 ... 43-n) zu ermitteln.

14. Verfahren zum Betrieb eines Steuerungs- und Übertragungssystem für eine Textilmaschine, mit wenigstens einer Mastersteuereinrichtung (19), mit mehreren Slave-Einheiten (20-1 ... 20-n), die jeweils wenigstens einen Sensor (36-1 ... 36-n), eine Speichereinrichtung (34-1 ... 34-n) zur Abspeicherung sensorspezifischer Sensor-Sollwerte, eine Verarbeitungseinrichtung (35-1 ... 35-n) und eine Pointereinrichtung (37-1 ... 37-n) zur Auswahl eines aktuellen Sensor-Sollwerts aus der Speichereinrichtung (34-1 ... 34-n) enthalten, und mit einer Informationsübertragungseinrichtung (24), über die die Slave-Einheiten (20-1 ... 20-n) an die Mastersteuereinrichtung (19) angeschlossen sind, um Information von der Mastersteuereinrichtung (19) zu empfangen und Information an die Mastersteuereinrichtung (19) zu senden, wobei die Verarbeitungseinrichtung (35-1 ... 35-n) den von der Pointereinrichtung (37-1 ... 37-n) bezeichneten Sollwert mit einem von dem Sensor (36-1 ... 36-n) gelieferten Ist-Wert vergleicht und ein Alarmsignal erzeugt, wenn keine ausreichende Übereinstimmung zwischen dem Sensor-Sollwert und dem ist-Wert vorliegt, und wobei sensorspezifische Individualpläne (32-1...32-n) mit den Sensor-Sollwerten in den Speichereinrichtungen (34-1...34-n) abgespeichert und synchronisiert abgearbeitet werden.

15. Verfahren nach Anspruch 14, **dadurch gekennzeichnet, dass** aus einem Gesamtplan (31) abgeleitete sensorspezifische Individualpläne (32-1 ... 32-n) in den Speichereinrichtungen der Slave-Einheiten (20-1 ... 20-n) abgespeichert und synchronisiert abgearbeitet werden.

16. Verfahren nach Anspruch 14, **dadurch gekennzeichnet, dass** in einem Lernlauf die von den Sensoren (36-1...38-n) erfassten Signale als sensorspezifische Sensor-Sollwerte in Korrelation zu Taktsignalen in den Speichereinrichtungen (34-1 ... 34-n) abgespeichert und synchronisiert abgearbeitet werden.

## Claims

1. Control and transmission system (18) for a textile machine (1),
- with at least one master control device (19),
- with a plurality of slave units (20-1 to 20-n), which in each case contain at least one sensor (36-1 to 36-n), a memory device (34-1 to 34n) for storing sensor-specific desired sensor values, a processing device (35-1 to 35-n) and a pointer device (37-1 to 37n) to select a current desired sensor value from the memory device (34-1 to 34n), wherein the processing device (35-1 to 35n) is set up to compare the desired value designated by the pointer device (37-1 to 37n) with an actual value supplied by the sensor (36-1 to 36-n) and to generate an alarm signal when no adequate agreement is present between the desired sensor value and the actual value,
- with an information transmission device (24) on the master control device (19), by means of which the slave units (20-1 to 20-n) are connected to the master control device (19) to receive information from the master control device (19) and to send information to the master control device (19), and
- with a list control of the sensors (36-1 to 36-n), wherein sensor-specific individual plans (32-1 to 32-n) with the desired sensor values are stored in the memory devices (34-1 to 34-n) and are executed in a synchronised manner.

2. Control and transmission system according to claim 1, **characterised in that** the master control device (19) transmits sensor-specific individual plans (32-1 to 32-n) derived from a total plan (31) to the slave units (20-1 to 20-n).

3. Control and transmission system according to claim 1, **characterised in that** the individual plans (32-1 to 32-n) contain the machine position-specific desired sensor values.

4. Control and transmission system according to claim 1, **characterised in that** the slave units (20-1 to 20-n) are set up to store, in a learning run, the signals detected by their sensors (36-1 to 36-n) as sensor-specific desired sensor values in correlation with clock signals in the memory device (34-1 to 34n).

5. Control and transmission system according to claim 4, **characterised in that** the clock signals are supplied by the master control device (19) and designate the machine position.

6. Control and transmission system according to claim 4, **characterised in that** the sensors (36-1 to 36-n) transmit the desired sensor values obtained in the learning run to the master control device (19).

7. Control and transmission system according to claim 1, **characterised in that** an alarm line (21), to which all the slave units (20-1 to (20-n) are connected, is provided to transmit the alarm signal.

8. Control and transmission system according to claim 7, **characterised in that** the alarm line (21) is a line which goes from an output (23-1 to 23-n-1) of a slave unit (20-1 to 20-n) to an input (22-2 to 22-n) of a following slave unit (20-2 to 20-n).

9. Control and transmission system according to claim 7, **characterised in that** the alarm line (21), in a first operating mode of the control and transmission system, is used to address the slave units (20-1 to 20-n).

10. Control and transmission system according to claim 8, **characterised in that**, in the first operating mode, the input (22-1 to 22-n), which is provided to connect the alarm line (21), and the associated output (23-1 to 23-n) are not connected to one another.

11. Control and transmission system according to claim 8, **characterised in that** the alarm line (21), in a second operating mode, is exclusively used to transmit an alarm signal, the input (22-1 to 22-n) being used to connect the alarm line (21) being connected to the associated output (23-1 to 23-n) at each slave unit (20-1 to 20-n).

12. Control and transmission system according to claim 1, **characterised in that** the pointer device (37-1 to 37-n) contains a pulse counter and receives a counting pulse signal from the master control device (19) in order to determine the pointer value to retrieve the current desired value from the memory device (34-1 to 34-n).

13. Control and transmission system according to claim 1, **characterised in that** the pointer device (37-1 to 37-n) contains an address decoder and receives an address signal from the master control device (19) in order to determine therefrom the pointer value to retrieve the current desired value from the memory device (43-1 to 43-n).

14. Method for operating a control and transmission system for a textile machine, with at least one master control device (19), with a plurality of slave units (20-1 to 20-n), which in each case contain at least one sensor (36-1 to 36-n), a memory device (34-1 to 34-n) for storing sensor-specific desired sensor values, a processing device (35-1 to 35-n) and a pointer device (37-1 to 37-n) to select a current desired sensor value from the memory device (34-1 to 34-n), and with an information transmission device (24), by means of which the slave units (20-1 to 20-n) are connected to the master control device (19) in order to receive information from the master control device (19) and to send information to the master control device (19), wherein the processing device (35-1 to 35-n) compares the desired value designated by the pointer device (37-1 to 37-n) with an actual value supplied by the sensor (36-1 to 36-n) and generates an alarm signal when no adequate agreement is present between the desired sensor value and the actual value, and wherein sensor-specific individual plans (32-1 to 32-n) with the desired sensor values are stored in the memory devices (34-1 to 34-n) and are executed in a synchronised manner.

15. Method according to claim 14, **characterised in that** sensor-specific individual plans (32-1 to 32-n) derived from a total plan (31) are stored in the memory devices of the slave units (20-1 to 20-n) and are executed in a synchronised manner.

16. Method according to claim 14, **characterised in that**, in a learning run, the signals detected by the sensors (36-1 to 36-n) are stored as sensor-specific desired sensor values in correlation with clock signals in the memory devices (34-1 to 34-n) and are executed in a synchronised manner.

## Revendications

1. Système de commande et de transfert (18) pour une machine textile (1),
- avec au moins un dispositif de commande maître (19),
- avec plusieurs unités esclaves (20-1 ... 20-n) qui contiennent respectivement un capteur (36-1 ... 36-n), un dispositif d'enregistrement (34-1 ... 34n) pour l'enregistrement de valeurs de consigne de capteur spécifiques au capteur, un dispositif de traitement (35-1 ... 35-n) et un dispositif de pointage (37-1 ... 37n) pour la sélection d'une valeur de consigne de capteur actuelle du dispositif d'enregistrement (34-1 ... 34n), le dispositif de traitement (35-1 ... 35n) étant aménagé afin de comparer la valeur de consigne désignée par le dispositif de pointage (37-1 ... 37n) avec une valeur réelle fournie par le capteur (36-1 ... 36-n) et de générer un signal d'alarme si aucune concordance suffisante entre la valeur de consigne de capteur et la valeur réelle n'existe,
- avec un dispositif de transfert d'informations (24) sur le dispositif de commande maître (19), par lequel les unités esclaves (20-1 ... 20-n) sont raccordées au dispositif de commande maître (19) afin de recevoir une information du dispositif de commande maître (19) et d'envoyer une information au dispositif de commande maître (19) et
- avec une commande de liste des capteurs (36-1 ... 36-n), des plans individuels (32-1 ... 32-n) spécifiques au capteur étant enregistrés et exécutés de manière synchronisée avec les valeurs de consigne de capteur dans les dispositifs d'enregistrement (34-1 ... 34n).

2. système de commande et de transfert selon la revendication 1, **caractérisé en ce que** le dispositif de commande maître (19) transfère des plans individuels (32-1 ... 32-n) spécifiques au capteur dérivés d'un plan global (31) aux unités esclaves (20-1 ... 20-n).

3. Système de commande et de transfert selon la revendication 1, **caractérisé en ce que** les plans individuels (32-1 ... 32-n) contiennent les valeurs de consigne de capteur spécifiques à la position de la machine.

4. Système de commande et de transfert selon la revendication 1, **caractérisé en ce que** les unités esclaves (20-1 ... 20-n) sont aménagées afin d'enregistrer, dans un cycle d'apprentissage, les signaux détectés par leurs capteurs (36-1 ... 36-n) comme valeurs de consigne de capteur spécifiques au capteur en corrélation avec des signaux de synchronisation dans le dispositif d'enregistrement (34-1 ... 34-n),

5. Système de commande et de transfert selon la revendication 4, **caractérisé en ce que** les signaux de synchronisation sont fournis par le dispositif de commande maître (19) et caractérisent la position de la machine.

6. Système de commande et de transfert selon la revendication 4, **caractérisé en ce que** les capteurs (36-1 ... 36-n) transfèrent les valeurs de consigne de capteur obtenues dans le cycle d'apprentissage au dispositif de commande maître (19).

7. Système de commande et de transfert selon la revendication 1, **caractérisé en ce que** pour le transfert du signal d'alarme, un câble d'alarme (21) est prévu, auquel sont raccordées toutes les unités esclaves (20-1 ... 20n).

8. Système de commande et de transfert selon la revendication 7, **caractérisé en ce que** le câble d'alarme (21) est un câble qui va d'une sortie (23-1 ... 23-n-1) d'une unité esclave (20-1 ... 20-n) à une entrée (22-2 ... 22-n) d'une unité esclave suivante (20-2 ... 20-n).

9. Système de commande et de transfert selon la revendication 7, **caractérisé en ce que** le câble d'alarme (21) sert dans un premier mode de fonctionnement du système de commande et de transfert à l'adressage des unités esclaves (20-1 ... 20-n).

10. Système de commande et de transfert selon la revendication 8, **caractérisé en ce que** dans le premier mode de fonctionnement, l'entrée (22-1 ... 22-n) prévue pour le raccordement du câble d'alarme (21) et la sortie afférente (23-1 ... 23-n) ne sont pas reliées entre elles.

11. système de commande et de transfert selon la revendication 8, **caractérisé en ce que** le câble d'alarme (21) sert dans un seconde mode de fonctionnement exclusivement au transfert d'un signal d'alarme, sur chaque unité esclave (20-1 ... 20-n), l'entrée (22-1...22-n) servant au raccordement du câble d'alarme (21) étant reliée à la sortie associée (23-1 ... 23-n).

12. Système de commande et de transfert selon la revendication 1, **caractérisé en ce que** le dispositif de pointage (37-1 ... 37-n) contient un compteur d'impulsion et reçoit un signal d'impulsion de comptage du dispositif de commande maître (19) afin de déterminer la valeur de pointage pour extraire la valeur de consigne actuelle du dispositif d'enregistrement (34-1 ... 34-n).

13. Système de commande et de transfert selon la revendication 1, **caractérisé en ce que** le dispositif de pointage (37-1 ... 37-n) contient un décodeur d'adresse et reçoit un signal d'adresse du dispositif de commande maître (19) afin de déterminer à partir de celui-ci la valeur de pointage pour extraire la valeur de consigne actuelle du dispositif d'enregistrement (43-1 ... 43-n).

14. Procédé de fonctionnement d'un système de commande et de transfert pour une machine textile, avec au moins un dispositif de commande maître (19), avec plusieurs unités esclaves (20-1 ... 20-n) qui contiennent respectivement au moins un capteur (36-1 ... 36-n), un dispositif d'enregistrement (34-1 ... 34-n) pour l'enregistrement de valeurs de consigne de capteur spécifiques au capteur, un dispositif de traitement (35-1 ... 35-n) et un dispositif de pointage (37-1 ... 37-n) pour la sélection d'une valeur de consigne de capteur actuelle du dispositif d'enregistrement (34-1 ... 34-n), et avec un dispositif de transfert d'informations (24), par l'intermédiaire duquel les unités esclaves (20-1 ... 20-n) sont raccordées au dispositif de commande maître (19) afin de recevoir une information du dispositif de commande maître (19) et d'envoyer une information au dispositif de commande maître (19), le dispositif de traitement (35-1 ... 35-n) comparant la valeur de consigne désignée par le dispositif de pointage (37-1...37-n) avec une valeur réelle fournie par le capteur (36-1...36-n) et générant un signal d'alarme si aucune concordance suffisante entre la valeur de consigne de capteur et la valeur réelle n'existe et des plans individuels (32-1 ... 32-n) spécifiques au capteur étant enregistrés avec les valeurs de consigne de capteur dans les dispositifs d'enregistrement (34-1 ... 34-n) et exécutés de manière synchronisée.

15. Procédé selon la revendication 14, **caractérisé en ce que** des plans individuels (32-1 ... 32-n) spécifiques au capteur dérivés d'un plan global (31) sont enregistrés dans les dispositifs d'enregistrement des unités esclaves (20-1 ... 20-n) et exécutés de manière synchronisée.

16. Procédé selon la revendication 14, **caractérisé en ce que** dans un cycle d'apprentissage, les signaux détectés par les capteurs (36-1 ... 36-n) sont enregistrés comme des valeurs de consigne de capteur spécifiques au capteur en corrélation avec des signaux de synchronisation dans les dispositifs d'enregistrement (34-1 ... 34-n) et exécutés de manière synchronisée.
